# EUROPEAN PATENT SPECIFICATION

(11) **EP 1 813 652 B1**
(45) Date of publication and mention of the grant of the patent: **02.09.2009**
(21) Application number: 06125308.4
(22) Date of filing: 04.12.2006
(51) Int. Cl.: C09D 5/00

(54) **Article made of biodegradable resin and method of making the same**
Aus biologisch abbaubarem Harz hergestellter Artikel und Verfahren zu seiner Herstellung
Article constitué de résine biodégradable et procédé de fabrication de celui-ci

(30) Priority: 25.01.2006 JP 2006015890
(43) Date of publication of application: 01.08.2007
(73) Proprietor: FUJITSU LIMITED, Kawasaki-shi, Kanagawa 211-8588 (JP)
(72) Inventor: YUI, Yasushi c/o FUJITSU LIMITED, Kawasaki-shi, Kanagawa 211-8588 (JP)
(74) Representative: Fenlon, Christine Lesley

(56) References cited:
- JP-A- 2000 085 837
- JP-A- 2002 069 178

## Description

### BACKGROUND OF THE INVENTION

### Field of the Invention:

The present invention relates to an article made of resin often utilized as the enclosure of an electronic apparatus such as a cellular or mobile phone terminal.

### Description of the Prior Art:

A cellular or mobile phone terminal includes an enclosure. The enclosure includes a base made of a petroleum resin such as acrylonitrile butadiene styrene (ABS), polycarbonate (PC), or the like. Molding process is employed to form the base. A metallic plating film is formed on the surface of the base. The metallic plating film may be made of an electrically-conductive material such as copper, nickel, or the like. The metallic plating film functions as a shield for electromagnetic waves, a ground, and the like, for example.

Disposal of the enclosure often requires an incineration of the base, for example. The incineration of made of a petroleum resin inevitably generates a larger amount of carbon dioxide. This is supposed to deteriorate the environment. On the other hand, a base may be made of a biodegradable resin such as polylactic acid, for example. The base of this type is decomposable in the ground. Incineration can be avoided. This serves to prevent generation of a larger amount of carbon dioxide. However, no method has been found to form a metallic plating film on the base made of a biodegradable resin.

JP 2002 069178 discloses a polymer which has, as a repeating unit, a residual group of acidic polyamino acid, containing a sulfobetaine group or a phosphobetaine or salts thereof. In the production method for the polymer, an amino group is converted to the sulfobetaine group by reacting polysuccinimide or a polymer having acidic group with a compound given by a general formula.

JP 2000 085837 discloses a carrier tape composed of a base layer comprising a biodegradable plastic, and a covering layer made of a conductive material, which covers the surface of the base layer. When disposed of into the earth, the biodegradable plastic is decomposed by an enzyme produced by microbes in the earth. The covering layer made of the conductive material comprises a biodegradable plastic which is the same kind as that of the base layer, and a carbon powder. The enzyme from the microbes reaches the inside of the carrier tape and decomposes the carrier tape.

### SUMMARY OF THE INVENTION

Accordingly it is desirable to provide an article made of a biodegradable resin, capable of reliably having an electric conductivity. It is also desirable to provide a method of making the article made of a biodegradable resin.

According to an embodiment of the present invention, there is provided an article comprising a base made of a biodegradable resin; a coating film covering over a surface of the base; characterised by an insulating adhesive film covering over a surface of the coating film, said insulating adhesive film being made of a resin material; and a metallic plating film covering over a surface of the adhesive film; wherein said coating film is made of a petroleum resin containing a conductive material.

The article allows the base to have the surface covered with the coating film containing a conductive material. The coating film firmly attaches to the surface of the base. This results in a reliable establishment of an electric conductivity of the article. The coating film functions as a shield for electromagnetic waves, a ground, and the like.

Sandblast may be employed to remove the coating film off the surface of the base, for example. The base can be decomposed in the ground, for example. Refuse can thus be decreased to the utmost. Even when the base is incinerated, the amount of carbon dioxide can be reduced to approximately half the amount obtained in the case of a base made of a petroleum resin material.

A previously-proposed resin article usually includes a base made of a petroleum resin. The base may be covered with a metallic plating film. The metallic plating film firmly attaches to the base. The base must be subjected to a chemical process using an acid or alkaline solution for removal of the metallic plating film. A troublesome operation is required to remove the metallic plating film. Additionally, a larger amount of carbon dioxide is inevitably generated during the incineration of the base.

The article of the invention further comprises a metallic plating film covering over the surface of the adhesive film. The coating film contains a conductive material as described above. The metallic plating film is made of a conductive material. The combination of the coating film and the metallic plating film results in an enhanced electric conductivity of the article as compared with employment of only the coating film. The article is thus allowed to exhibit an enhanced function such as a shield for electromagnetic waves, a ground, and the like.

An adhesive film made of a resin material is interposed between the coating film and the metallic plating film. Since the adhesive film is insulative, the coating film and the metallic plating film are allowed to function as electrodes. The coating film, the adhesive film and the metallic plating film are in combination allowed to function as a capacitor. The article serves to hold electric current in the adhesive film. The article is thus allowed to provide an enhanced function such as a shield for electromagnetic waves, a ground, and the like.

An adhesive film made of a resin material may be interposed between the base and the coating film in the article. The adhesive film covers over the surface of the base. A fluid adhesive is employed to form the adhesive film. The resulting adhesive film is allowed to have the surface reflecting the surface of the fluid adhesive. In other words, asperity is normally established on the surface of the resulting adhesive film. The asperity allows the coating film to firmly attach to the surface of the adhesive film. The article is thus allowed to reliably have an electric conductivity.

A specific method may be provided to make the article of the invention. The method of making an article comprises preparing a base made of a biodegradable resin, said base formed in a predetermined shape; applying a fluid coating material to a surface of the base for forming a coating film covering over the surface of the base, characterised by applying a fluid adhesive material to a surface of the coating film for forming an adhesive film covering over the surface of the coating film, the fluid adhesive being made of an insulating resin; and forming a metallic plating film covering over a surface of the adhesive film, the metallic plating film based on plating of a conductive material; wherein said fluid coating material is made of a petroleum resin containing a conductive material.

The method employs a fluid coating material for forming the coating film. The resulting coating film firmly attaches to the surface of the base made of a biodegradable resin. The article is in this manner allowed to reliably have an electric conductivity. No pretreatment such as a chemical etching is required for the surface of the base prior to formation of the coating film.

The method further comprises forming a metallic plating film covering over the surface of the adhesive film, the metallic plating film based on plating of a conductive material. The method employs a fluid coating material for forming the coating film. The resulting coating film is allowed to have the surface reflecting the surface of the applied fluid coating material. In other words, asperity is normally established on the surface of the resulting coating film. The article is thus allowed to reliably have an electric conductivity.

A pretreatment such as a chemical etching is usually effected on the surface of the base made of a petroleum resin prior to plating process. The chemical etching may be applied to a base made of a biodegradable resin in the same manner. However, the chemical etching causes an excessive roughness over the surface of the base made of a biodegradable resin, so that a metallic plating material hardly attaches to the surface of the base. Even if a metallic plating film is possibly formed on the surface of the base, the metallic plating film easily peel off from the surface of the base.

A previously-proposed resin article includes a base made of a petroleum resin material such as acrylonitrile butadiene styrene (ABS), polycarbonate (PC), or the like. Molding process is utilized to form the base. A die is employed to shape the base. In this case, asperity is hardly established over the surface of the base. A metallic plating film fails to firmly attach to the surface of the base. A pretreatment such as a chemical etching is required for the surface of the base prior to the plating process as described above. A troublesome operation is required to establish an electric conductivity of the resin article.

The method may further comprise applying a fluid adhesive material, made of a resin, to the surface of the base for forming an adhesive film covering over the surface of the base prior to formation of the coating film. In this case, a fluid adhesive material is employed to form the adhesive film. The resulting adhesive film is allowed to have the surface reflecting the surface of the applied fluid adhesive. In other words, asperity is normally established on the surface of the resulting adhesive film. The asperity allows the coating film to firmly attach to the surface of the adhesive film. The resulting article is thus allowed to reliably have an electric conductivity.

The method further comprises applying a fluid adhesive material, made of a resin, to the surface of the coating film for forming an adhesive film covering over the surface of the coating film prior to formation of the metallic plating film. The method employs a fluid adhesive material for forming the adhesive film. The fluid adhesive material is applied to the surface of the coating film. The resulting adhesive film is allowed to have the surface reflecting the surface of the applied fluid adhesive. In other words, asperity is normally established on the surface of the resulting adhesive film. The asperity allows the metallic plating film to firmly attach to the surface of the adhesive film. The article is thus allowed to reliably have an electric conductivity.

Optional features are set out in the dependent claims.

### BRIEF DESCRIPTION OF THE DRAWINGS

Fig. 1 is a perspective view schematically illustrating a cellular or mobile phone terminal as an example of an electronic apparatus;
Fig. 2 is an enlarged partial sectional view schematically illustrating the cross-section of a molded article made of a biodegradable resin according to a first example not embodying the invention;
Fig. 3 is an enlarged partial sectional view schematically illustrating the cross-section of a molded article made of a biodegradable resin according to a modification of the first example;
Fig. 4 is an enlarged partial sectional view schematically illustrating the cross-section of a molded article made of a biodegradable resin according to a second example not embodying the invention;
Fig. 5 is an enlarged partial sectional view schematically illustrating the cross-section of a molded article made of a biodegradable resin according to a modification of the second example; and
Fig. 6 is an enlarged partial sectional view schematically illustrating the cross-section of a molded article made of a biodegradable resin according to an embodiment of the invention.

### DESCRIPTION OF THE PREFERRED EMBODIMENTS

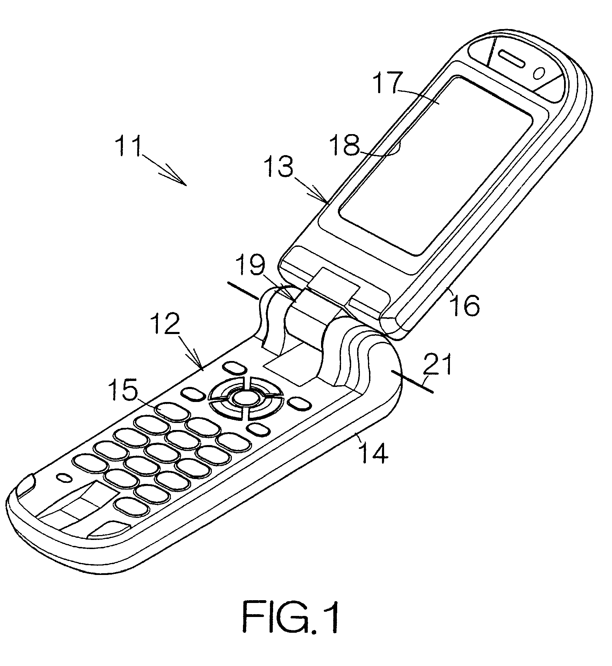

Fig. 1 schematically illustrates a cellular or mobile phone terminal 11 of a so-called flip or clamshell type as a specific example of an electronic apparatus. The cellular phone terminal 11 includes a transmitter 12 and a receiver 13. The transmitter 12 includes a molded article made of a biodegradable resin, namely a main enclosure 14. A printed circuit board, not shown, is incorporated within the main enclosure 14. Processing circuits, such as a central processing unit (CPU) and a memory, are mounted on the printed circuit board, as previously known. Input keypads 15, such as an on-hook key, an off-hook key, ten keys, and the like, are embedded in the front flat surface of the transmitter 12. The CPU operates in response to the manipulation of the input keypads 15.

The receiver 13 includes a molded article made of a biodegradable resin, namely a display enclosure 16. A flat display panel such as a liquid crystal display (LCD) panel 17 is incorporated within the display enclosure 16. A window opening 18 is defined in the front flat surface of the display enclosure 16. The screen of the LCD panel 17 is exposed in the window opening 18. Various texts and graphics are displayed on the screen of the LCD panel 17 in response to the operation of the CPU.

The transmitter 12 is coupled to the receiver 13 through a swivel mechanism 19. The swivel mechanism 19 realizes rotation of the receiver 13 on the transmitter 12 around a horizontal axis 21. The horizontal axis 21 is set in parallel with the front flat surface of the main enclosure 14 at the end of the front flat surface of the main enclosure 14. The receiver 13 can be superposed on the transmitter 14 based on the rotation around the horizontal axis 21. The cellular phone terminal 11 in this manner takes the closed status. The screen of the LCD panel 17 is overlaid on the front flat surface of the main enclosure 14.

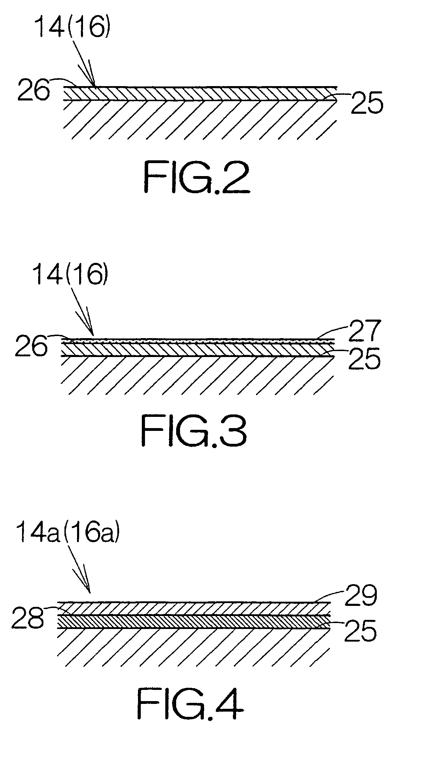

Fig. 2 schematically illustrates the cross-section of the main enclosure 14 according to a first example not embodying the invention. The main enclosure 14 includes a base or body 25. The base 25 is made of a biodegradable resin. Polylactic acid, cellulose acetate, cellulose polyacetate, or the like, may be utilized as the biodegradable resin. The thickness of the base 25 may be set at 1mm approximately, for example.

The main enclosure 14 includes a coating film 26 made of resin. The coating film 26 covers over the surface of the base 25. The coating film 26 is formed based on solidification of a fluid coating material. A petroleum resin such as acrylic, epoxy, or the like, may be utilized as the resin. Here, the coating film 26 may be formed only on the inside surface of the base 25. The thickness of the coating film 26 may be set in a range from 1µm to 20µm approximately, for example.

The coating film 26 contains an electrically conductive material. The content of the electrically conductive material may be set equal to or smaller than 50wt% in the total weight of the coating film 26, for example. Here, the coating film 26 may contain at least one of the electrically conductive materials such as gold, silver, copper, nickel, tin, platinum, iridium, rhodium, ruthenium, indium, palladium, aluminum, titanium, chromium, cobalt, boron, silicon, gallium, arsenic, carbon, iron, zinc and lead. The coating film 26 may contain two or more of these electrically conductive materials or an alloy consisting of two or more of these electrically conductive materials.

The surface of the base 25 is covered with the coating film 26 made of the resin containing an electrically conductive material in the main enclosure 14. The coating film 26 firmly attaches to the inside surface of the base 25. This results in a reliable establishment of an electric conductivity of the main enclosure 14. The coating film 26 functions as a shield for electromagnetic waves, a ground, and the like.

The coating film 26 can easily be removed off the surface of the base 25. Sandblast may be employed for the removal, for example. The base 25 can be decomposed in the ground, for example. Refuse can thus be decreased to the utmost. Even when the base 25 is incinerated, the amount of carbon dioxide can be reduced to approximately half the amount obtained in the case of a base made of a petroleum resin material.

A previously-proposed main enclosure includes a base made of a petroleum resin covered with a metallic plating film. The metallic plating film firmly attaches to the base. The base must be subjected to a chemical process using an acid or alkaline solution for removal of themetallicplating film. A troublesome operation is required to remove the metallic plating film. Additionally, a larger amount of carbon dioxide is inevitably generated during the incineration of the base.

Next, a brief description will be made on a method of making the main enclosure 14. The base 25 is first molded. An injection molding machine may be employed to form the base 25, for example. In this case, a fluid material of a biodegradable resin is filled in the cavity of a die. Polylactic acid is utilized as the biodegradable resin, for example.

A fluid coating material is then applied to the inside surface of the base 25. A petroleum resin is utilized as the fluid coating material, for example. The fluid coating material contains the aforementioned electrically conductive material or materials. The content of the electrically conductive material or materials may be set equal to or less than 50wt% in the total weight of the fluid coating material, for example. The electrically conductive material may be added to the fluid coating material in the form of powder or paste, for example.

Spraying method is employed to apply the fluid coating material to the inside surface of the base 25, for example. The sprayed fluid coating material is allowed to extend over the inside surface of the base 25 by a predetermined thickness. The sprayed coating material is subsequently dried. The coating film 26 is in this manner formed on the inside surface of the base 25. Printing, dipping, or the like, may alternatively be employed to apply the fluid coating material. The main enclosure 14 is in this manner produced.

The method employs a fluid coating material for forming the coating film 26. The resulting coating film firmly attaches to the inside surface of the base 25 made of a biodegradable resin. The main enclosure 14 is allowed to reliably have an electric conductivity over a corresponding area. No pretreatment such as a chemical etching is required for the surface of the base 25 prior to formation of the coating film 26.

A pretreatment such as a chemical etching is usually effected on the surface of the base made of a petroleum resin prior to plating process. The chemical etching may be applied to a base made of a biodegradable resin in the same manner. However, the chemical etching causes an excessive roughness over the surface of the base made of a biodegradable resin, so that a metallic plating material hardly attaches to the surface of the base. Even if a metallic plating film is possibly formed on the surface of the base, the metallic plating film easily peel off from the surface of the base.

The surface of the coating film 26 may be covered with a metallic plating film 27, as shown in Fig. 3. The thickness of the metallic plating film 27 may be set equal to or larger than 0.01µm, for example. It should be noted that the coating film 26 and/or the metallic plating film 27 may be formed on the surface of the base 25 only over a partial area or areas.

The metallic plating film 27 may be made of an electrically conductive material. Here, the metallic plating film 27 may be made of at least one of the electrically conductive materials such as gold, silver, copper, nickel, tin, platinum, iridium, rhodium, ruthenium, indium, palladium, aluminum, titanium, chromium, cobalt, boron, silicon, gallium, arsenic, carbon, iron, zinc and lead. The metallic plating film 27 may be made of two or more of these electrically conductive materials or an alloy consisting of two or more of these electrically conductive materials.

The coating film 26 contains an electrically conductive material in the main enclosure 14. Additionally, the metallic plating film 27 is made of an electrically conductive material. The combination of the coating film 26 and the metallic plating film 27 results in an enhanced electric conductivity of the main enclosure 14 as compared with employment of only the coating film 26. The main enclosure 14 is thus allowed to exhibit an enhanced function such as a shield for electromagnetic waves, a ground, and the like.

Plating process may be employed to form the metallic plating film 27 on the surface of the coating film 26 in the main enclosure 14. The metallic plating film 27 may be made of rhodium or platinum, for example. The plating process may include electroless plating, electroplating, evaporating, dipping, or the like, for example. The main enclosure 14 is in this manner produced.

The method employs a fluid coating material for forming the coating film 26. The resulting coating film 26 is allowed to have the surface reflecting the surface of the applied fluid coating material. In other words, asperity is normally established on the surface of the resulting coating film 26. The asperity allows the metallic plating film 27 to firmly attach to the surface of the coating film 26. The main enclosure 14 is thus allowed to reliably have an electric conductivity over a corresponding area.

A previously-proposed main enclosure includes a base made of a petroleum resin material such as acrylonitrile butadiene styrene (ABS), polycarbonate (PC), or the like. Molding process is utilized to form the base. A die is employed to shape the base. In this case, asperity is hardly established over the surface of the base. A metallic plating film fails to firmly attach to the surface of the base. A pretreatment such as a chemical etching is required for the surface of the base prior to the plating process as described above. A troublesome operation is required to establish an electric conductivity of the base.

Fig. 4 schematically illustrates the cross-section of a main enclosure 14a according to a second example not embodying the invention. The main enclosure 14a includes an adhesive film 28 made of resin. The adhesive film 28 covers over the inside surface of the base 25. The thickness of the adhesive film 28 may be set in a range from 1µm to 20µm approximately, for example. The adhesive film 28 is formed based on solidification of a fluid adhesive. An insulative resin adhesive such as acrylic, epoxy, urethane, silane, fluorine, or the like, is utilized as the adhesive.

The surface of the adhesive film 28 is covered with a coating film 29. The coating film 29 is formed based on solidification of a fluid coating material. The thickness of the coating film 29 may be set in a range from 1µm to 20µm approximately, for example. The coating film 29 may contain an electrically conductive material or materials identical to those of the aforementioned coating film 26. The content of the electrically conductive material or materials may be set equal to or less than 50wt% in the total weight of the coating film 29, for example. Like reference numerals are attached to the structure or components equivalent to those of the aforementioned first embodiment.

The adhesive film 28 covers over the inside surface of the base 25 in the main enclosure 14a. A fluid adhesive is employed to form the adhesive film 28. The resulting adhesive film 28 is allowed to have the surface reflecting the surface of the applied fluid adhesive. In other words, asperity is normally established on the surface of the resulting adhesive film 28 . The asperity allows the coating film 29 to firmly attach to the surface of the adhesive film 28. The main enclosure 14a is thus allowed to reliably have an electric conductivity over a corresponding area.

An epoxy adhesive is applied to the inside surface of the base 25 in a method of making the main enclosure 14a, for example. The epoxy adhesive may be the type utilizing a curing agent to harden a fluid epoxy adhesive, for example. Spraying method may be employed to apply the fluid adhesive, for example. The sprayed fluid adhesive is allowed to extent over the inside surface of the base 25 by a predetermined thickness. The sprayed adhesive is subsequently dried. The adhesive gets cured at room temperature. The adhesive film 28 is in this manner formed on the inside surface of the base 25. Printing, dipping, or the like, may alternatively be employed to apply the adhesive.

Here, the epoxy adhesive may be a thermosetting adhesive in place of the aforementioned type, for example. Such an epoxy adhesive gets cured based on heat. Alternatively, an acrylic adhesive, an urethane adhesive, or the like, may be utilized in place of the epoxy adhesive. The acrylic adhesive, the urethane adhesive, or the like, may get cured based on irradiation of ultraviolet rays, reaction with vapor in the air, or the like.

The coating film 29 is then formed on the surface of the adhesive film 28. A fluid coating material is applied to the surface of the adhesive film 28. The coating material is sprayed onto the surface of the adhesive film 28 by a predetermined thickness. The sprayed coating material is subsequently dried. The coating film 29 is in this manner formed on the surface of the adhesive film 28. The main enclosure 14a is in this manner produced.

The method employs a fluid adhesive for forming the adhesive film 28. The resulting adhesive film 28 is allowed to have the surface reflecting the surface of the applied fluid adhesive. In other words, asperity is normally established on the surface of the resulting adhesive film 28. The asperity allows the coating film 29 to firmly attach to the surface of the adhesive film 28. The main enclosure 14a is thus allowed to reliably have an electric conductivity over a corresponding area.

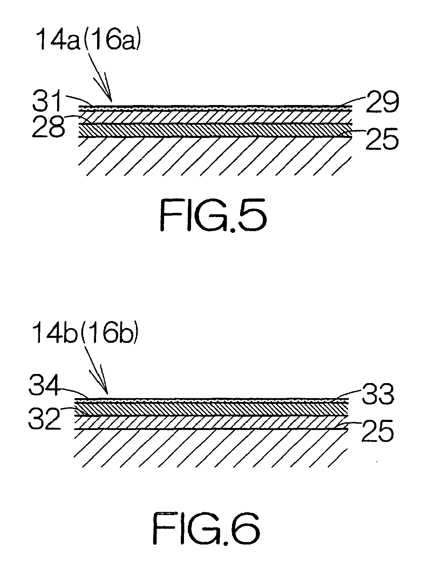

The surface of the coating film 29 may be covered with a metallic plating film 31, as shown in Fig. 5. The metallic plating film 31 may be made of an electrically conductive material or materials identical to those of the aforementioned metallic plating film 27. The thickness of the metallic plating film 31 may be set equal to or larger than 0.01µm, for example.

The coating film 29 contains an electrically conductive material or materials in the main enclosure 14a. The metallic plating film 31 is made of an electrically conductive material or materials. The combination of the coating film 29 and the metallic plating film 31 results in an enhanced electric conductivity of the main enclosure 14a as compared with employment of only the coating film 29. The main enclosure 14a is thus allowed to provide an enhanced function such as a shield for electromagnetic waves, a ground, and the like, as compared with the aforementioned embodiments.

Plating process may be employed to form the metallic plating film 31 on the surface of the coating film 29 in the main enclosure 14a. The metallic plating film 31 may be made of rhodium or platinum, for example. The plating process may include electroless plating, electroplating, evaporating, dipping, or the like, for example. The main enclosure 14a is in this manner produced.

The method employs a fluid coating material for forming the coating film 29. The fluid coating material is applied to the surface of the adhesive film 28. The resulting coating film 29 is allowed to have the surface reflecting the surface of the applied fluid coating material. In other words, asperity is normally established on the surface of the resulting coating film 29. The asperity allows the metallic plating film 31 to firmly attach to the surface of the coating film 29. The main enclosure 14a is thus allowed to reliably have an electric conductivity over a corresponding area.

Fig. 6 schematically illustrates the cross-section of a main enclosure 14b according to an embodiment of the invention. The main enclosure 14b includes a coating film 32 made of resin. The coating film 32 covers over the inside surface of the base 25. A petroleum resin may be utilized as the resin, for example. The coating film 32 is formed based on solidification of a fluid coating material. The thickness of the coating film 32 may be set in a range from 1µm to 20µm approximately, for example. The coating film 32 contains an electrically conductive material or materials identical to those of the aforementioned coating films 26, 29.

An adhesive film 33 covers over the surface of the coating film 32. The thickness of the adhesive film 33 may be set in the range from 1µm to 20µm approximately, for example. The adhesive film 33 is formed based on solidification of a fluid adhesive. The type of adhesive may be identical to the type of adhesive which is utilized for the aforementioned adhesive film 28.

The surface of the adhesive film is covered with a metallic plating film 34. The metallic plating film 34 may be made of an electrically conductive material or materials identical to those of the aforementioned metallic plating film 27, 31. The thickness of the metallic plating film 34 may be set equal to or larger than 0.01µm, for example. Like reference numerals are attached to the structure or components equivalent to those of the aforementioned embodiments.

The coating film 32 firmly attaches to the inside surface of the base 25 in the main enclosure 14b. The adhesive film 33 likewise firmly attaches to the surface of the coating film 32. The metallic plating film 34 also firmly attaches to the surface of the adhesive film 33. The main enclosure 14b is thus allowed to reliably have an electric conductivity over a corresponding area.

The main enclosure 14b allows interposal of the insulating adhesive film 33 between the coating film 32 and the metallic plating film 34. The coating film 32 and the metallic plating film 34 are thus allowed to function as a so-called electrode, respectively. The coating film 32, the adhesive film 33 and the metallic plating film 34 are in combination allowed to function as a capacitor. The main enclosure 14b serves to hold electric current in the adhesive film 33. The main enclosure 14b is thus allowed to provide an enhanced function such as a shield for electromagnetic waves, a ground, and the like, as compared with the aforementioned embodiments.

The coating film 32 is formed on the inside surface of the base 25 in a method of making the main enclosure 14b. A fluid coating material is applied to the inside surface of the base 25. Spraying method is employed to apply the fluid coating material to the inside surface of the base 25, for example. The sprayed fluid coating material is allowed to extend over the inside surface of the base 25 by a predetermined thickness. The sprayed coating material is subsequently dried. The coating film 32 is in this manner formed on the inside surface of the base 25.

A fluid adhesive such as an epoxy adhesive is then applied to the surface of the coating film 32. Spraying method may be employed to apply the fluid adhesive, for example. The sprayed fluid adhesive is allowed to extent over the surface of the coating film 32 by a predetermined thickness. The sprayed fluid adhesive is subsequently dried. The adhesive film 33 is in this manner formed on the surface of the coating film 32. The metallic plating film 34 is then formed on the surface of the adhesive film 33 in the same manner as the metallic plating films 27, 31.

The method employs a fluid adhesive applied to the surface of the coating film 32 for forming the adhesive film 33. The resulting adhesive film 33 is allowed to have the surface reflecting the surface of the applied fluid adhesive. In other words, asperity is normally established on the surface of the resulting adhesive film 33. The asperity allows the metallic plating film 34 to firmly attach to the surface of the adhesive film 33. The main enclosure 14b is thus allowed to reliably have an electric conductivity over a corresponding area.

The display enclosure 16 may be formed in the same manner as the main enclosure 14, 14a or 14b. The molded article made of a biodegradable resin according to embodiments of the present invention can be applied to various purposes including an enclosure of an electronic component such as a notebook personal computer, a personal digital assistant (PDA), a component of an automobile, a building material, a component of a home appliance, an electrode of a fuel cell, a catalysis, or the like.

## Claims

1. An article (14, 16) comprising:
a base (25) made of a biodegradable resin;
a coating film (32) covering over a surface of the base (25); **characterised by**
an insulating adhesive film (33) covering over a surface of the coating film (32), said insulating adhesive film (33) being made of a resin material; and
a metallic plating film (34) covering over a surface of the adhesive film (33); wherein
said coating film (32) is made of a petroleum resin containing a conductive material.

2. The article according to claim 1, further comprising an adhesive film (28) interposed between the base and the coating film, said adhesive (28) film being made of a resin material.

3. A method of making an article, comprising:
preparing a base (25) made of a biodegradable resin, said base formed in a predetermined shape;
applying a fluid coating material to a surface of the base for forming a coating film (32) covering over the surface of the base (25), **characterized by**
applying a fluid adhesive material to a surface of the coating film (32) for forming an adhesive film (33) covering over the surface of the coating film (32), the fluid adhesive being made of an insulating resin; and
forming a metallic plating film (34) covering over a surface of the adhesive film (33), the metallic plating film based on plating of a conductive material; wherein
said fluid coating material is made of a petroleum resin containing a conductive material.

4. The method according to claim 3, further comprising applying a fluid adhesive material to the surface of the base (25) for forming an adhesive film (28) covering over the surface of the base (25) prior to formation of the coating film, said fluid adhesive material being made of a resin.

5. The article according to claim 1 or 2 wherein the biodegradable resin of the base (25) includes at least one of polylactic acid, cellulose acetate and cellulose polyacetate.

6. The article according to claim 1, 2 or 5, wherein the petroleum resin of the coating film (32) includes at least one of acrylic and epoxy.

7. The article according to claim 2, wherein the resin material of the adhesive film (28, 33) includes at least one of acrylic, epoxy, urethane, silane and fluorine.

8. An electronic apparatus comprising an enclosure including the article according to any of claims 1-2 and 5-7.

## Patentansprüche

1. Artikel (14, 16) mit:
einer Basis (25), die aus einem biologisch abbaubaren Harz hergestellt ist;
einem Beschichtungsfilm (32), der eine Oberfläche der Basis (25) bedeckt; **gekennzeichnet durch**:
einen isolierenden Kleberfilm (33), der eine Oberfläche des Beschichtungsfilms (32) bedeckt, welcher isolierende Kleberfilm (33) aus einem Harzmaterial hergestellt ist; und
einen metallischen Plattierungsfilm (34), der eine Oberfläche des Kleberfilms (33) bedeckt; bei dem
der Beschichtungsfilm (32) aus einem Petrolharz hergestellt ist, das ein leitendes Material enthält.

2. Artikel nach Anspruch 1, ferner mit einem Kleberfilm (28), der zwischen der Basis und dem Beschichtungsfilm angeordnet ist, welcher Kleberfilm (28) aus einem Harzmaterial hergestellt ist.

3. Verfahren zum Herstellen eines Artikels mit:
Vorbereiten einer Basis (25), die aus einem biologisch abbaubaren Harz hergestellt ist, welche Basis in einer vorbestimmten Form gebildet ist;
Auftragen eines flüssigen Beschichtungsmaterials auf eine Oberfläche der Basis, zum Bilden eines Beschichtungsfilms (32), der die Oberfläche der Basis (25) bedeckt, **gekennzeichnet durch**:
Auftragen eines flüssigen Klebermaterials auf eine Oberfläche des Beschichtungsfilms (32), zum Bilden eines Kleberfilms (33), der die Oberfläche des Beschichtungsfilms (32) bedeckt, welcher flüssige Kleber aus einem isolierenden Harz hergestellt ist; und
Bilden eines metallischen Plattierungsfilms (34), der eine Oberfläche des Kleberfilms (33) bedeckt, welcher metallische Plattierungsfilm auf dem Plattieren eines leitenden Materials basiert: bei dem
das flüssige Beschichtungsmaterial aus einem Petrolharz hergestellt ist, das ein leitendes Material enthält.

4. Verfahren nach Anspruch 3, ferner mit dem Auftragen eines flüssigen Klebermaterials auf die Oberfläche der Basis (25), zum Bilden eines Kleberfilms (28), der die Oberfläche der Basis (25) bedeckt, vor dem Bilden des Beschichtungsfilms, welches flüssige Klebermaterial aus einem Harz hergestellt ist.

5. Artikel nach Anspruch 1 oder 2, bei dem das biologisch abbaubare Harz der Basis (25) wenigstens eines von polylaktischer Säure, Celluloseacetat und Cellulosepolyacetat enthält.

6. Artikel nach Anspruch 1, 2 oder 5, bei dem das Petrolharz des Beschichtungsfilms (32) wenigstens eines von Acryl und Epoxid enthält.

7. Artikel nach Anspruch 2, bei dem das Harzmaterial des Kleberfilms (28, 33) wenigstens eines von Acryl, Epoxid, Urethan, Silan und Fluor enthält.

8. Elektronische Vorrichtung mit einem Gehäuse, das den Artikel nach einem der Ansprüche 1-2 und 5-7 enthält.

## Revendications

1. Article (14, 16) comprenant :
une base (25) constituée d'une résine biodégradable ;
un film de revêtement (32) recouvrant une surface de la base (25) ; **caractérisé par**
un film adhésif isolant (33) recouvrant une surface du film de revêtement (32), ledit film adhésif isolant (33) étant constitué d'un matériau de résine ; et
un film de couche métallique (34) recouvrant une surface du film adhésif (33) ; dans lequel
ledit film de revêtement (32) est constitué d'une résine de pétrole contenant un matériau conducteur.

2. Article selon la revendication 1 comprenant de plus un film adhésif (28) intercalé entre la base et le film de revêtement, ledit film adhésif (28) étant constitué d'un matériau de résine.

3. Procédé de fabrication d'un article comprenant :
la préparation d'une base (25) constituée d'une résine biodégradable, ladite base étant façonnée dans une forme prédéterminée ;
l'application d'un matériau de revêtement fluide sur une surface de la base pour former un film de revêtement (32) recouvrant la surface de la base (25), **caractérisé par**
l'application d'un matériau adhésif fluide sur une surface du film de revêtement (32) pour former un film adhésif (33) recouvrant la surface du film de revêtement (32), l'adhésif fluide étant constitué d'une résine isolante ; et
la formation d'un film de couche métallique (34) recouvrant une surface du film adhésif (33), le film de couche métallique étant basé sur le placage d'un matériau conducteur ; dans lequel
ledit matériau de revêtement fluide est constitué d'une résine de pétrole contenant un matériau conducteur.

4. Procédé selon la revendication 3 comprenant de plus l'application d'un matériau adhésif fluide sur la surface de la base (25) pour former un film adhésif (28) recouvrant la surface de la base (25) avant la formation du film de revêtement, ledit matériau adhésif fluide étant constitué d'une résine.

5. Article selon la revendication 1 ou 2, dans lequel la résine biodégradable de la base (25) comprend au moins un composé parmi l'acide polylactique, l'acétate de cellulose et le poly(acétate de cellulose).

6. Article selon la revendication 1, 2 ou 5, dans lequel la résine de pétrole du film de revêtement (32) comprend au moins un composé parmi un acrylique et un époxy.

7. Article selon la revendication 2, dans lequel le matériau de résine du film adhésif (28, 33) comprend au moins un composé parmi un acrylique, un époxy, un uréthane, un silane et un fluor.

8. Appareil électronique comprenant un boîtier comprenant l'article selon l'une quelconque des revendications 1-2 et 5-7.
